(19) Europäisches Patentamt
European Patent Office
Office européen des brevets

(11) Publication number: 0 159 085
A1

(12) **EUROPEAN PATENT APPLICATION**

(21) Application number: 85200508.1

(22) Date of filing: 01.04.85

(51) Int. Cl.[4]: C 09 K 11/78

(30) Priority: 12.04.84 NL 8401175

(43) Date of publication of application: 23.10.85 Bulletin 85/43

(84) Designated Contracting States: DE FR GB IT NL

(71) Applicant: N.V. Philips' Gloeilampenfabrieken
Groenewoudseweg 1
NL-5621 BA Eindhoven(NL)

(72) Inventor: Seegers, Johannes Hubertus
c/o INT. OCTROOIBUREAU B.V. Prof. Holstlaan 6
NL-5656 AA Eindhoven(NL)

(74) Representative: Evers, Johannes Hubertus Marie et al,
INTERNATIONAAL OCTROOIBUREAU B.V Prof. Holstlaan 6
NL-5656 AA Eindhoven(NL)

(54) **Cathode-ray tube.**

(57) A picture display cathode-ray tube, for example, a DGD tube, provided with a luminescent screen (3) containing a luminescent terbium- and europium-activated indium borate according to the formula $In_{1-p-q}Tb_pEu_qBO_3$, in which $50.10^{-6} \leq p \leq 0.010$ and $50.10^{-6} \leq q \leq 0.010$.

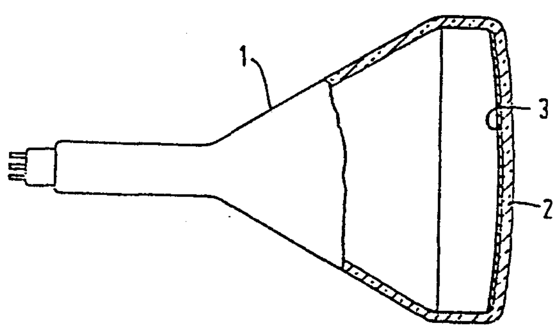


EP 0 159 085 A1

Cathode-ray tube.

The invention relates to a picture display cathode-ray tube provided with a luminescent screen comprising a luminescent indium borate activated by a lanthanide element.

Such a tube is known from US-PS 3,394,084. This Patent Specification describes luminescent indium borates (fundamental lattice $InBO_3$) which are activated by a lanthanide element, the activator replacing part of the indium in the fundamental lattice. Materials suitable for practical applications are the borates activated by trivalent terbium which exhibit a green emission having, as appears from measurements, CIE colour co-ordinates x = 0.330 and y = 0.620 and the borates activated by trivalent europium which exhibit a red emission having colour co-ordinates x = 0.605 and y = 0.395, which materials have a high brightness.

The known luminescent indium borates have a decay of the order of 20 msec (medium decay). The decay is defined as the time which elapses after the excitation by the electron beam has ceased till the instant at which the brightness has reached a value of 10 % of the brightness in the stationary state. Due to their suitable emission colour, their favourable brightness value, their medium decay character and the substantially complete absence of phosphorescence (prolonged afterglow at a low brightness level), the known borates are particularly suitable for use in data display cathode-ray tubes, the so-called DGD (Data Graphics Display) tubes. In such tubes, picture repetition frequencies of 25 - 100 Hz are used in practice. If these tubes were provided with luminescent materials having a short decay, very annoying brightness variations or flicker phenomena, which are very fatiguing for the user, may be observed. With the use of materials having a long decay and/or with phosphorescence phenomena, the tube exhibits in the succession of pictures a disturbing afterglow of the preceding pictures.

It is very desirable for display tubes that a number of different colours are available. Essentially, it is possible to use the aforementioned green-emitting and red-emitting indium borates in mixtures, as a result of which all the mixed colours between green and red can be obtained. Other colours can then be obtained by adding a third material, for example a blue luminescing material. The use of mixtures of two and more particularly of three luminescent materials meets with practical difficulties, however, in the manufacture of the tubes because it is mostly inevitable that colour differences are obtained across the picture screen due to demixing of the luminescent materials.

The invention has for its object to provide cathode-ray tubes which display pictures of a colour chosen from a large colour range.

A picture display cathode-ray tube according to the invention is provided with a luminescent screen which contains an indium borate activated by a lanthanide element and it is characterized in that the indium borate contains as activator trivalent terbium and trivalent europium and corresponds to the formula $In_{1-p-q}Tb_pEu_qBO_3$, in which
$50.10^{-6} \leq p \leq 0.010$ and
$50.10^{-6} \leq q \leq 0.010$.

A cathode-ray tube according to the invention contains a luminescent indium borate which is activated both by Tb and by Eu. Consequently, like with physical mixtures of Tb-activated borate and Eu-activated borate, all the mixed colours between the green Tb emission and the red Eu emission can be obtained by a suitable adjustment of the activator concentrations. It could not at all be expected that high brightnesses can be obtained with borates twice activated. In fact, it is generally known that two

activators, such as $Tb^{3+}$ and $Eu^{3+}$, when used in one lattice, very strongly extinguish mutually theirrespective emissions (see, for example, British Patent Specification 1,121,055, in which this phenomenon is described for luminescent yttrium or rare earth metal oxysulphides). Experiments leading to the invention have shown, however, that with the indium borates according to the invention brightnesses can be obtained which are substantially equal to those obtained with physical mixtures of borates. It has been found that it is then required that the concentrations of the activator elements have to be low to very low, that is to say that both the Tb concentration $\underline{p}$ and the Eu concentration $\underline{q}$ must be at most 0.010. It is also a surprise that even with very low values of $\underline{p}$ and $\underline{q}$ (down to $50.10^{-6}$), high brightnesses can still be obtained. The optimum values of $\underline{p}$ and $\underline{q}$ as to the brightness lie a factor 10 to 100 lower than the optimum values of the activator concentration in the known borates activated by one lanthanide element.

The luminescent indium borates in cathode-ray tubes according to the invention are found to have, like the known borates,a medium decay character (decay of the order of 20 msec) and to exhibit substantially no phosphorescence. With these borates, a number of yellow and orange emission colours can be obtained, which are very desirable for practical applications and which could be obtained hitherto only with mixtures of luminescent materials or with materials having an unsatisfactory decay or having other disadvantages.

A cathode-ray tube according to the invention is preferred, which is characterized in that

$0.0001 \leq p \leq 0.010$

$0.0001 \leq q \leq 0.010$ and

$p + q \leq 0.010$

With these comparatively low values of the concentrations $\underline{p}$ and $\underline{q}$ and of the overall concentration p + q, in fact the highest brightnesses are obtained.

The emission colour of a luminescent indium borate in a cathode-ray tube according to the invention can be characterized by only the x co-ordinate or only the y co-ordinate in the CIE colour point diagram because the colour points of these borates are all located on or very close to the connection line of the colour points of the pure green Tb emission (x = 0.330 and y = 0.620) and the pure red Eu emission (x = 0.605 and y = 0.395). Hereinafter the colour point of the borates is indicated only by the x co-ordinate.

As could be expected, the Tb:Eu ratio p/q determines the location of the colour point of the luminescent borates. However, it has been found that also the overall activator concentration, p+q, has a very strong influence and also determines the colour point. This influence becomes manifest in an increase of the x co-ordinate of the colour point with an increase of p+q if p/q is kept constant. It has been found, for example, that at a value of p/q = 1 the x co-ordinate of the colour point can have values of from approximately 0.450 with a very low p+q to approximately 0.575 with a comparatively high p+q. It has been found that the brightness of the borates at comparatively high values of p+q is not an optimum.

An embodiment of a cathode-ray tube according to the invention is characterized in that the borate emits light having a colour coordinate x between 0.410 and 0.450 and that $1 \leq p/q \leq 5$ and preferably $1 \leq p/q \leq 3$. Such a tube has a yellow emission colour which is often desirable for practical applications (target x = 0.425, y = 0.550). The yellow colours in the said range of x co-ordinates can be obtained with p/q values in the range of from 1 to 5. However, p/q values of from 1 to 3 are preferred because in this case overall concentrations p+q can be chosen which give rise to optimum brightnesses of the tubes.

A second embodiment of a cathode-ray tube according to the invention is characterized in that the borate emits light having a colour co-ordinate x between 0.450 and 0.520 and in that $0.5 \leq p/q \leq 3$ and preferably $0.5 \leq p/q \leq 1.5$. With this tube, also yellow colours can be obtained which are frequently used in practice (target $x = 0.470$, $y = 0.500$). Again it has been found that the p/q value can be chosen in a comparatively large range, i.e. of from 0.5 to 3, but that values in a smaller range, i.e. from 0.5 to 1.5, are preferred in order to obtain the highest brightnesses.

Frequently used colours in display tubes are the orange-red colours having colour points if, for example $x = 0.547$, $y = 0.446$ and $x = 0.557$, $y = 0.442$. An advantageous embodiment of a cathode-ray tube according to the invention is therefore characterized in that the borate emits light having a colour co-ordinate x between 0.520 and 0.570 and in that $0.10 \leq p/q \leq 1.5$ and preferably $0.10 \leq p/q \leq 0.5$.

In a cathode-ray tube according to the invention, the luminescent screen can further contain at least one additional luminescent material. This of course has the advantage that a larger range of emission colours becomes possible.

A very favourable embodiment of a cathode-ray tube according to the invention is characterized in that the luminescent screen contains from 5 to 35 % by weight of a blue-luminescing silver-activated zinc sulphide. If such a generally known blue-luminescing sulphide is provided in the luminescent screen together with, for example, a yellow-luminescing borate, for example, in the form of a mixture, a white emission colour (paper-white) can be obtained, which is very desirable for many applications.

The luminescent indium borates can be obtained by a solid state reaction at a high temperature of mixtures of oxides of the constituent elements or of compounds yielding these oxides at high temperature. The reaction generally takes plave in air at a temperature of 1100-1400°C.

Embodiments of cathode-ray tubes according to the invention will now be described more fully with reference to a drawing and a number of examples and measurements.

The drawing shows diagrammatically and partly in sectional view a data display cathode-ray tube (DGD tube). The tube comprises an evacuated envelope 1 provided with a picture screen 2 on which a luminescent screen 3 is disposed. The screen 3 is provided with a luminescent indium borate activated by terbium and europium.

Example of preparation.

There are dissolved in 600 ml of concentrated $HNO_3$:

200 g of In-metal

0.195 g of $Tb_4O_7$

0.18 g of $Eu_2O_3$.

The solution is evaporated to dryness at a temperature of 200-300°C and the dry product obtained is mixed with 430 g of $H_3BO_3$. The mixture is heated in a furnace in air at a temperature of 1200°C for 15 - 35 hours. The reaction product is washed with boiling water, after which it is dried, pulverized and sieved. The powder obtained is a luminescent indium borate according to the formula $In_{0.9988}Tb_{0.0006}Eu_{0.0006}BO_3$. Upon cathode-ray exitation this borate is found to have a yellow emission colour with x = 0.470 and y = 0.500. The brightness is found to be 38 in relative units. (The brightness of P22, a green-luminescing zinc cadmium sulphide activated by Cu and Al, is used as a standard and assumed to be 100). It has been found that comparable results are obtained if there is started from dry mixtures of indium oxide, the activator oxides and $H_3BO_3$.

In the same manner as indicated in the above example of preparation, a number of indium borates were obtained in which the concentrations of terbium and europium were equal(p = q and p/q = 1). In the following Table 1, the chosen value for p is given for these materials. Furthermore, the x coordinate of the colour point for each material is stated and the relative brightness (H) is indicated which is obtained when the material is excited by cathode rays.

Table 1

| Example | p | x | H |
|---|---|---|---|
| 1 | 0.00005 | 0.449 | 12 |
| 2 | 0.00020 | 0.449 | 33 |
| 3 | 0.00060 | 0.470 | 38 |
| 4 | 0.00125 | 0.474 | 33 |
| 5 | 0.0025 | 0.511 | 28 |
| 6 | 0.0050 | 0.551 | 19 |
| 7 | 0.010 | 0.576 | 15 |

It clearly appears from Table 1 that at a constant value of p/q (in this case p/q = 1) a displacement of the colour point to higher values of x occurs if the overall concentration p+q increases. At the maximum permissible value of p+q (p+q = 0.02 in Example 6) an acceptable value of the brightness is still found. The optimum brightnesses are obtained, however, at much lower values of the concentrations p and q. It should be noted for explanation that a borate analogous to the borates of Examples 1 to 6, but with p = 0.025 and q = 0.025 (usual values of the activator concentration of optimum luminescent borates containing only one activator), has a colour point x = 0.588 and a brightness of only 8, so that this material is not suitable for practical applications.

In the same manner as in the Example of preparation preparation, luminescent indium borates were prepared having yellow emission colours in the range x = 0.410 to x = 0.450. Table 2 indicates for each material the chosen value of p and q and the value p/q. For each example, the measured x value and the brightness value H are given.

-Table-

Table 2

| Example | p | q | p/q | x | H |
|---|---|---|---|---|---|
| 8 | 0.0009 | 0.0003 | 3 | 0.409 | 43 |
| 9 | 0.0080 | 0.0020 | 4 | 0.416 | 27 |
| 10 | 0.0045 | 0.0015 | 3 | 0.419 | 31 |
| 11 | 0.0025 | 0.00125 | 2 | 0.434 | 35 |
| 12 | 0.0075 | 0.0025 | 3 | 0.443 | 23 |

Luminescent indium borates having an orange-red emission in the range x = 0.520 and x = 0.570 were prepared having the composition and brightnesses specified in Examples 13 to 16 in Table 3.

Table 3

| Example | p | q | p/q | x | H |
|---|---|---|---|---|---|
| 13 | 0.0009 | 0.0017 | 0.5 | 0.524 | 32 |
| 14 | 0.0017 | 0.0033 | 0.5 | 0.552 | 25 |
| 15 | 0.0002 | 0.0010 | 0.2 | 0.550 | 34 |
| 16 | 0.0003 | 0.0009 | 0.33 | 0.536 | 31 |

The luminescent screen of a cathode-ray tube was provided with a mixture of 90 % by weight of a yellow-luminescing indium borate and 10 % by weight of a blue-luminescing zinc sulphide. Theindium borate was obtained in the manner described in the above Example of preparation (brightness 38, colour point x = 0.470 and y = 0.500; see also Example 3 in Table 1). The zinc sulphide was activated by silver and had a brightness 14 and a colour point x = 0.150 and y = 0.55. The tube containing the mixture emitted white light (paper-white) having a brightness of 36 and a colour point x = 0.355 and y = 0.395.

# CLAIMS

1. A picture display cathode-ray tube provided with a luminescent screen containing a luminescent indium borate activated by a lanthanide element, characterized in that the indium borate contains as activator trivalent terbium and trivalent europium and corresponds to the formula $In_{1-p-q}Tb_pEu_qBO_3$, in which $50.10^{-6} \leq p \leq 0.010$
$50.10^{-6} \leq q \leq 0.010$.

2. A cathode-ray tube as claimed in Claim 1, characterized in that $0.0001 \leq p \leq 0.010$
$0.0001 \leq q \leq 0.010$
$p+q \leq 0.010$.

3. A cathode-ray tube as claimed in Claim 1 or 2, characterized in that the borate emits light having a colour co-ordinate <u>x</u> between 0.410 and 0.450 and in that $1 \leq p/q \leq 5$ and preferably $1 \leq p/q \leq 3$.

4. A cathode-ray tube as claimed in Claim 1 or 2, characterized in that the borate emits light having a colour co-ordinate x between 0.450 and 0.520 and in that $0.5 \leq p/q \leq 3$ and preferably $0.5 \leq p/q \leq 1.5$.

5. A cathode-ray tube as claimed in Claim 1 or 2, characterized in that the borate emits light having a colour coordinate <u>x</u> between 0.520 and 0.570 and in that $0.10 \leq p/q \leq 1.5$ and preferably $0.10 \leq p/q \leq 0.5$.

6. A cathode-ray tube as claimed in any one of Claims 1 to 5, characterized in that the luminescent screen further contains an additional luminescent material.

7. A cathode-ray tube as claimed in Claim 6, characterized in that the luminescent screen contains 5 to 35 % by weight of a blue-luminescing silver-activated zinc sulphide.

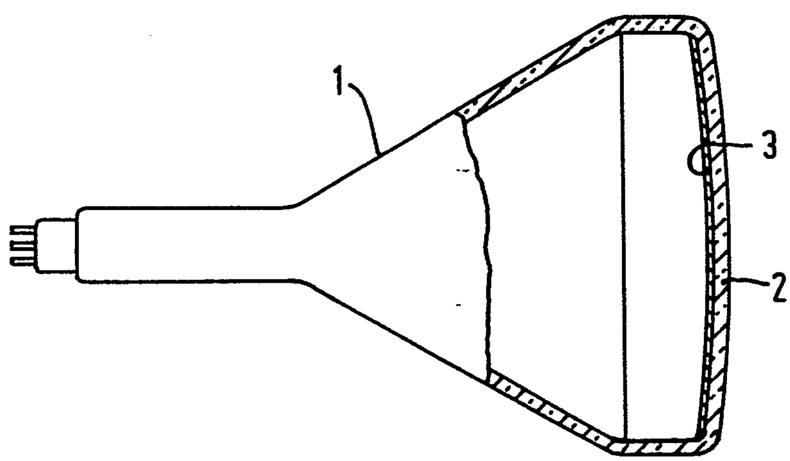
1
3
2

European Patent Office

# EUROPEAN SEARCH REPORT

0159085
Application number
EP 85 20 0508

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | CHEMICAL ABSTRACTS, vol. 97, no. 10, September 1982, pages 680-681, no. 82515m, Columbus, Ohio, US; & JP - A - 82 51 783 (TOSHIBA CORP.) 26-03-1982 * Abstract * | 1 | C 09 K 11/78 |
| | ----- | | |
| | | | TECHNICAL FIELDS SEARCHED (Int. Cl.4) |
| | | | C 09 K 11/00 |

The present search report has been drawn up for all claims

| Place of search | Date of completion of the search | Examiner |
|---|---|---|
| THE HAGUE | 01-07-1985 | DROUOT M.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document